(19) Europäisches Patentamt
European Patent Office
Office européen des brevets

(11) EP 3 950 387 B1

(12) EUROPEAN PATENT SPECIFICATION

(45) Date of publication and mention of the grant of the patent:
**06.09.2023 Bulletin 2023/36**

(21) Application number: **21184092.1**

(22) Date of filing: **06.07.2021**

(51) International Patent Classification (IPC):
***B60C 11/00*** *(2006.01)* ***B60C 11/13*** *(2006.01)*
***B60C 11/03*** *(2006.01)*

(52) Cooperative Patent Classification (CPC):
**B60C 11/005;** B60C 11/0304; B60C 2011/0025; B60C 2011/0341

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2020 JP 2020132684**

(43) Date of publication of application:
**09.02.2022 Bulletin 2022/06**

(73) Proprietor: **SUMITOMO RUBBER INDUSTRIES LIMITED**
**Kobe-shi**
**Hyogo-ken (JP)**

(72) Inventor: **ITO, Hiroshi**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 1 630 003**
**EP-A1- 3 141 402**
**WO-A1-2019/220680**
**JP-A- 2005 035 404**
**JP-A- 2015 131 599**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 950 387 B1

**Description**

TECHNICAL FIELD

The present invention relates to a tire.

BACKGROUND OF THE INVENTION

JP 3213127 B describes that steering stability and fuel efficiency of a tire are improved by forming tread parts into a two-layer structure of a base rubber located inside in a tire radial direction and a cap rubber located outside in the tire radial direction (so-called a cap/base structure) and applying a rubber composition with a small loss tangent tan δ to the base rubber.
JP 2005 035404 A discloses a tread rubber including three layers comprising a base layer, an intermediate layer and a surface layer which are different to each another regarding JIS durometer A hardness, complex modulus of elasticity at 70°C and loss tangent at 70°C.
EP 3 141 402 A1 discloses a tire in which a reinforcement layer and a tread section are laminated in this order from the inside toward the outside in a radial direction of the tire.
JP 2015 131599 A discloses a tread of a pneumatic tire including: a center portion positioned at the center; and paired shoulder portions positioned outside in a shaft direction of the center portion.

SUMMARY OF THE INVENTION

Since the tire as described in JP 3213127 B has a high loss tangent tan δ of a cap rubber layer, wet grip performance at the time of the tire being a new article is high. However, when the cap rubber layer is worn away, a groove volume of a circumferential groove becomes small, and a hydroplaning phenomenon becomes easy to occur, as well as, combined with the base rubber layer with a low heat generation being exposed, the wet grip performance can deteriorate sharply.
An object of the present invention is to provide a tire having an improved overall performance of fuel efficiency, wet grip performance at the time of the tire being a new article, and wet grip performance after abrasion.
As a result of intensive studies, the present inventor has found that the above-described problems can be solved by providing three or more rubber layers in a tread part, setting a complex elastic modulus E* and a loss tangent tan δ of the rubber layers to a predetermined relationship, and forming inner base rubber layers which correspond to bottom parts of land parts asymmetrically in a tire width direction, and completed the present invention.
That is, the present invention relates to:

[1] A tire having a tread at least comprising a first rubber layer constituting a tread surface, a second rubber layer adjacent to inside in a tire radial direction of the first rubber layer, and a third rubber layer adjacent to inside in a tire radial direction of the second rubber layer, wherein a complex elastic modulus of the third rubber layer at 30°C is lower than a complex elastic modulus of the first rubber layer at 30°C and a complex elastic modulus of the second rubber layer at 30°C, wherein a tan δ of the first rubber layer at 30°C is higher than a tan δ of the second rubber layer at 30°C and a tan δ of the third rubber layer at 30°C, wherein the tread has land parts extending continuously in a tire circumferential direction and partitioned by a plurality of circumferential grooves, wherein at least one of the land parts has the third layer formed asymmetrically with respect to a normal line passing through the center in the tire width direction in a tire meridian cross section including a tire rotation axis, wherein the thickness of the third rubber layer (t3) is 1.0 mm or more or 10.0 mm or less, and wherein the complex elastic modulus and the tan δ is measured via DMA under a condition of a temperature at 30°C, an initial strain of 10%, a dynamic strain of 1%, and a frequency of 10 Hz,
[2] The tire of the above [1], wherein a ratio of a thickness of the third layer to a total thickness of the first layer, the second layer, and the third layer is 0.30 or more,
[3] The tire of the above [1] or [2], wherein the complex elastic modulus of the second rubber layer at 30°C is lower than the complex elastic modulus of the first rubber layer at 30°C,
[4] The tire of any one of the above [1] to [3], wherein the complex elastic modulus of the second rubber layer at 30°C is 8 MPa or more,
[5] The tire of any one of the above [1] to [4], wherein the tan δ of the second rubber layer at 30°C is 0.25 or more,
[6] The tire of any one of the above [1] to [5], wherein a glass transition temperature of the first rubber layer is -15°C or higher,
[7] The tire of any one of the above [1] to [6], wherein a glass transition temperature of the second rubber layer is -20°C or higher,

[8] The tire of any one of the above [1] to [7], wherein an elongation at break of the first rubber layer measured according to JIS K6251 is 500% or more,

[9] The tire of any one of the above [1] to [8], wherein an elongation at break of the second rubber layer measured according to JIS K6251 is 450% or more,

[10] The tire of any one of the above [1] to [9], wherein a modulus of the second rubber at 100% stretching is larger than a modulus of the first rubber layer at 100% stretching,

[11] The tire of any one of the above [1] to [10], wherein a deepest part of a groove bottom of any one of the circumferential grooves is formed so as to be located inside in a tire radial direction with respect to an outermost part of the second rubber layer in the land part adjacent to the circumferential groove,

[12] The tire of any one of the above [1] to [11], wherein the land part has a sipe having both ends not opened in the circumferential groove,

According to the present invention, provided is a tire having an improved overall performance of fuel efficiency, wet grip performance at the time of the tire being a new article, and wet grip performance after abrasion.

BRIEF DESCRIPTION OF THE DRAWINGS

FIG. 1 is an enlarged cross-sectional view showing a part of a tread of a tire according to one embodiment of the present invention.

FIG. 2 is an enlarged cross-sectional view showing a part of a tread of a tire according to Comparative example.

DETAILED DESCRIPTION

The tire according to one embodiment of the present invention is a tire having a tread at least comprising a first rubber layer constituting a tread surface, a second rubber layer adjacent to inside in a tire radial direction of the first rubber layer, and a third rubber layer adjacent to inside in a tire radial direction of the second rubber layer, wherein a complex elastic modulus of the third rubber layer at 30°C is lower than a complex elastic modulus of the first rubber layer at 30°C and a complex elastic modulus of the second rubber layer at 30°C, wherein a tan $\delta$ of the first rubber layer at 30°C is higher than a tan $\delta$ of the second rubber layer at 30°C and a tan $\delta$ of the third rubber layer at 30°C, wherein the tread has land parts extending continuously in a tire circumferential direction and partitioned by a plurality of circumferential grooves, and wherein at least one of the land parts has the third layer formed asymmetrically with respect to a normal line passing through a center in a tire width direction in a tire meridian cross section including a tire rotation axis.

Although it is not intended to be bound by theory, in the present invention, the following can be considered as a mechanism that may suppress a decrease in wet grip performance after tire abrasion. That is, by making the complex elastic modulus E* of the third rubber layer the smallest and forming the third rubber layer asymmetrically in the land part, a hardness distribution of the land part is biased, which affects a grounding pressure. In a portion where the grounding pressure is high, a part where a water film touches the ground without riding on it is generated, and wet grip performance becomes increased, so that a difference between wet grip performance at the time of the tire being a new article and that at the time of abrasion can be made smaller.

The ratio of the thickness of the third layer to the total thickness of the first layer, the second layer, and the third layer is preferably 0.30 or more.

The complex elastic modulus of the second rubber layer at 30°C is preferably lower than the complex elastic modulus of the first rubber layer at 30°C.

The complex elastic modulus of the second rubber layer at 30°C is preferably 8 MPa or more.

The tan $\delta$ of the second rubber layer at 30°C is preferably 0.25 or more.

The glass transition temperature of the first rubber layer is preferably -15°C or higher.

The glass transition temperature of the second rubber layer is preferably -20°C or higher.

The elongation at break of the first rubber layer measured according to JIS K 6251 is preferably 500% or more.

The elongation at break of the second rubber layer measured according to JIS K 6251 is preferably 450% or more.

The modulus of the second rubber layer at 100% stretching is preferably larger than the modulus of the first rubber layer at 100% stretching.

It is preferable that the deepest part of the groove bottom of any one of the circumferential grooves is formed so as to be located inside in the tire radial direction with respect to the outermost part of the second rubber layer in the land part adjacent to the circumferential groove, and it is more preferable that the deepest part of the groove bottom of any one of the circumferential grooves is formed so as to be located inside in the tire radial direction with respect to the

outermost part of the third rubber layer in the land part adjacent to the circumferential groove.

It is preferable that, immediately below any one of the circumferential grooves, the tire has a recessed part recessed inside in the tire radial direction with respect to the outermost part of the second rubber layer in the land part adjacent to the circumferential groove, and a part of the first rubber layer is formed with a predetermined thickness in the recessed part of the second rubber layer. Moreover, it is preferable that, immediately below any one of the circumferential grooves, the tire has recessed parts recessed inside in the tire radial direction with respect to the outermost parts of the second rubber layer and the third rubber layer in the land part adjacent to the circumferential groove, and a part of the first rubber layer and the second rubber layer is formed with a predetermined thickness in the recessed part of the third rubber layer.

The land part preferably has a sipe having both ends not opened in the circumferential groove.

The tire which is one embodiment of the present invention will be described in detail below. However, the following descriptions are illustrative for explaining the present invention, and are not intended to limit the technical scope of the present invention to this description range only. Besides, in the present specification, a numerical range identified with "to" means to include the numerical values of both ends.

FIG. 1 is an enlarged cross-sectional view showing a part of the tread of the tire. In FIG. 2, a vertical direction is a tire radial direction, a horizontal direction is a tire width direction, and a direction perpendicular to a paper surface is a tire circumferential direction.

As shown in the figure, the tread part of the tire of the present invention comprises a first rubber layer 6, a second rubber layer 7, a third rubber layer 8 (hereinafter, simply referred to as a "first layer 6", a "second layer 7", and a "third layer 8"), and an outer surface of the first layer 6 constitutes a tread surface 3, the second layer 7 is adjacent to inside in a tire radial direction of the first layer 6, and the third layer 8 is adjacent to inside in a tire radial direction of the second layer 7. The first layer 6 typically corresponds to a cap tread. The second layer 7 and the third layer 8 typically correspond to a base tread or under tread. Moreover, as long as the object of the present invention is achieved, one or more rubber layers may be further provided between the third layer 8 and a belt layer.

In FIG. 1, a double-headed arrow t1 is a thickness of the first layer 6, a double-headed arrow t2 is a thickness of the second layer 7, and a double-headed arrow t3 is a thickness of the third layer 8. In FIG. 1, a middle point in the tire width direction of the land part 2 is represented as a symbol P. A straight line represented by a symbol N is a straight line (a normal line) that passes through the point P and is perpendicular to a tangent plane at this point P. In the present specification, the thicknesses t1, t2, and t3 are measured along the normal line N drawn from the point P on the tread surface at a position where a groove does not exist, in the cross section of FIG. 1.

In the present invention, the thickness t1 of the first layer 6 is, but not particularly limited to, preferably 1.0 mm or more, more preferably 1.5 mm or more, further preferably 2.0 mm or more, from the viewpoint of wet grip performance. On the other hand, the thickness t1 of the first layer 6 is preferably 6.0 mm or less, more preferably 5.5 mm or less, further preferably 5.0 mm or less, from the viewpoint of heat generation.

In the present invention, the thickness t2 of the second layer 7 is, but not particularly limited to, preferably 1.0 mm or more, more preferably 2.0 mm or more, further preferably 3.0 mm or more. Moreover, the thickness t2 of the second layer 7 is preferably 10.0 mm or less, more preferably 9.0 mm or less, further preferably 8.0 mm or less.

In the present invention, the thickness t3 of the third layer 8 is 1.0 mm or more, preferably 2.0 mm or more, further preferably 3.0 mm or more. Moreover, the thickness t3 of the third layer 8 is 10.0 mm or less, preferably 9.0 mm or less, further preferably 8.0 mm or less.

A ratio of the thickness of the third layer to a total thickness of the first layer 6, the second layer 7, and the third layer 8 (t3/(t1+t2+t3)) is preferably 0.25 or more, more preferably 0.28 or more, further preferably 0.30 or more, further preferably 0.32 or more, particularly preferably 0.35 or more, from the viewpoint of effects of the present invention.

The thickness of the first layer 6 is preferably thinner than the thickness of the second layer 7.

A groove depth H1 of the circumferential groove 1 can be calculated by a distance between an extension line 4 of the land part 2 and an extension line 5 of a deepest part of a groove bottom of the circumferential groove 1. Besides, the groove depth H1 can be, for example, when there are a plurality of circumferential grooves 1, a distance between the extension line 4 of the land part 2 and the extension line 5 of the deepest part of the groove bottom of the circumferential groove 1 having the deepest groove depth among the plurality of circumferential grooves 1.

In the present invention, the deepest part of the groove bottom of the circumferential groove 1 (the circumferential groove 1 on the left side in FIG. 1) having the deepest groove depth among the plurality of circumferential grooves 1 is formed so as to be located inside in the tire radial direction with respect to the outermost part of the second layer 7 and the outermost part of the third layer 8 in the land part 2 adjacent to the circumferential groove. That is, the extension line 5 of the deepest part of the groove bottom of the circumferential groove 1 (the circumferential groove 1 on the left side in FIG. 1) having the deepest groove depth among the plurality of circumferential grooves 1 is located inside in the tire radial direction with respect to an extension line 9 of the outermost part of the second layer 7 and an extension line 10 of the outermost part of the third layer 8 in the land part 2 adjacent to the circumferential groove.

In the present invention, immediately below the circumferential groove 1 (the circumferential groove 1 on the

left side in FIG. 1) having the deepest groove depth among the plurality of circumferential grooves 1 (inside in the tire radial direction), a recessed part recessed inside in the tire radial direction with respect to the outermost part of the second layer 7 and the outermost part of the third layer 8 in the land part 2 adjacent to the circumferential groove is provided, where a part of the first layer 6 and the second layer 7 with a predetermined thickness is formed in the recessed part of the third layer 8.

In the tire of the present invention, at least one of the land parts 2 has a third layer 8 formed asymmetrically with respect to the normal line N passing through the center in the tire width direction in a tire meridian cross section including a tire rotation axis. Such land part 2 having the asymmetrical third layer 8 may be a land part 2 located outside a vehicle when mounted thereon with respect to a tire equator, or may be a land part 2 located inside the vehicle when mounted thereon with respect to the tire equator. Moreover, the land part 2 having the asymmetrical third layer 8 may be a land part sandwiched between a plurality of circumferential grooves 1, or may be a shoulder land part sandwiched between the circumferential groove 1 and a tread ground contact end, though it is preferably a land part sandwiched between a plurality of circumferential grooves 1.

In the present invention, unless otherwise specified, a dimension and an angle of each member of the tire are measured in a state where the tire is incorporated into a normal rim and is filled with air so as to have a normal internal pressure. At the time of measurement, no load is applied to the tire. Besides, herein, a "normal rim" is a rim defined for each tire in a standard system including standards, on which the tire is based, by the standard, for example, a "standard rim" for JATMA, "Design Rim" for TRA, or "Measuring Rim" for ETRTO. A "normal internal pressure" herein is an air pressure defined for each tire by the standards, i.e., a "maximum air pressure" for JATMA, a maximum value described in Table "TIRE LOAD LIMITS AT VARIOUS COLD INFLATION PRESSURES" for TRA, or "INFLATION PRESSURE" for ETRTO.

"30°C E*" in the present invention refers to a complex elastic modulus E* under a condition of a temperature at 30°C, an initial strain of 10%, a dynamic strain of 1%, and a frequency of 10 Hz. 30°C E* of the first layer 6 is preferably 9 MPa or more, more preferably 10 MPa or more, further preferably 11 MPa or more, particularly preferably 12 MPa or more, from the viewpoint of steering stability. 30°C E* of the second layer 7 is preferably 7 MPa or more, more preferably 8 MPa or more, further preferably 9 MPa or more, from the viewpoint of steering stability. 30°C E* of the third layer 8 is preferably 5 MPa or more, more preferably 6 MPa or more, further preferably 7 MPa or more. On the other hand, each 30°C E* of the first layer 6, the second layer 7, and the third layer 8 is preferably 25 MPa or less, more preferably 20 MPa or less, further preferably 18 MPa or less, from the viewpoint of wet grip performance. In the present invention, 30°C E* of the third layer 8 is lower than 30°C E* of the first layer 6 and 30°C E* of the second layer 7. Moreover, 30°C E* of the second layer 7 is preferably lower than 30°C E* of the first layer 6. Besides, 30°C E* of each rubber layer can be appropriately adjusted depending on types and compounding amounts of the above-described rubber component, filler, plasticizer, and the like.

"30°C tan δ" in the present invention refers to a loss tangent tan δ under a condition of a temperature at 30°C, an initial strain of 10%, a dynamic strain of 1%, and a frequency of 10 Hz. 30°C tan δ of the first layer 6 is preferably 0.30 or more, more preferably 0.35 or more, further preferably 0.40 or more, from the viewpoint of wet grip performance. 30°C tan δ of the second layer 7 is preferably 0.20 or more, more preferably 0.25 or more, further preferably 0.30 or more. 30°C tan δ of the third layer 8 is preferably 0.10 or more, more preferably 0.15 or more, further preferably 0.20 or more. On the other hand, each 30°C tan δ of the first layer 6, the second layer 7, and the third layer 8 is preferably 0.65 or less, more preferably 0.60 or less, further preferably 0.55 or less, from the viewpoint of fuel efficiency. In the present invention, 30°C tan δ of the first layer 6 is higher than 30°C tan δ of the second layer 7 and 30°C tan δ of the third layer 8. Moreover, 30°C tan δ of the second layer 7 is preferably higher than 30°C tan δ of the third layer 8. Besides, 30°C tan δ of each rubber layer can be appropriately adjusted depending on types and compounding amounts of the above-described rubber component, filler, plasticizer, and the like.

The elongation at break (EB) in the present invention refers to an elongation at break (elongation at cutting) measured under a condition of a tensile speed of 3.3 mm/sec in an atmosphere of 23°C according to JIS K 6251. The EB of the first layer 6 is preferably 500% or more, more preferably 510% or more, further preferably 520% or more, from the viewpoint of maintaining smoothness of a surface. The EB of the second layer 7 is preferably 450% or more, more preferably 460% or more, further preferably 470% or more. Besides, an upper limit of the EB of the rubber compositions constituting the first layer 6, the second layer 7, and the third layer 8 is not particularly limited.

The modulus at 100% stretching in the present invention is a tension stress at 100% stretching in a columnar direction measured under a condition of a tensile speed of 3.3 mm/sec in an atmosphere of 23°C according to JIS K 6251. A modulus of the first layer 6 at 100% stretching is preferably 1.0 MPa or more, more preferably 1.1 MPa or more, further preferably 1.2 MPa or more, particularly preferably 1.3 MPa or more. Moreover, a modulus of the second layer 7 at 100% stretching is preferably 1.0 MPa or more, more preferably 1.1 MPa or more, further preferably 1.3 MPa or more, particularly preferably 1.5 MPa or more. Besides, an upper limit of the modulus of the first layer 6, the second layer 7, and the third layer 8 at 100% stretching is not particularly limited. In the present invention, it is preferable that the modulus of the second layer 7 at 100% stretching is larger than that of the first layer 6 at 100% stretching. A difference

between the modulus of the second layer 7 at 100% stretching and the modulus of the first layer 6 at 100% stretching is preferably 0.1 MPa or more, more preferably 0.2 MPa or more, further preferably 0.3 MPa or more. In the present specification, a "columnar direction" means a rolling direction at the time of forming a rubber sheet by extrusion or shearing.

Besides, the EB of each rubber layer and the modulus at 100% stretching can be appropriately adjusted depending on types and compounding amounts of the above-described rubber component, filler, plasticizer, and the like.

A glass transition temperature (Tg) in the present invention refers to a tan δ peak temperature measured by the following method. That is, for a rubber test piece (for example, length 20 mm × width 4 mm × thickness 1 mm) produced by being cut out from inside of a rubber layer of a tread part of each test tire so that a tire circumferential direction is on a long side, a temperature distribution curve of tan δ is measured under a condition of an initial strain of 10%, a dynamic strain of 1%, and a frequency of 10 Hz, using a dynamic viscoelasticity measuring device (for example, EPLEXOR series manufactured by gabo Systemtechnik GmbH), and a temperature corresponding to the largest tan δ value in the obtained temperature distribution curve (tan δ peak temperature) shall be defined as a glass transition temperature (Tg) in the present invention. A Tg of the rubber composition constituting the first layer 6 is preferably -15°C or higher, more preferably -12°C or higher, further preferably -10°C or higher, from the viewpoint of wet grip performance. A Tg of the rubber composition constituting the second layer 7 is preferably -20°C or higher, more preferably -15°C or higher, further preferably -12°C or higher, from the viewpoint of wet grip performance. Besides, an upper limit of the Tg of the rubber compositions constituting the first layer 6, the second layer 7, and the third layer 8 is, but not particularly limited to, preferably 20°C or lower, more preferably 15°C or lower, further preferably 10°C or lower. Besides, the Tg of each rubber layer can be appropriately adjusted depending on types and compounding amounts of the above-described rubber component and the like.

[Rubber composition]

The tire of the present invention can more effectively suppress deterioration of wet grip performance after tire abrasion by cooperation of the structures of the tire described above, particularly the shape of the tread, with the physical property of the rubber composition constituting each layer of the tread.

<Rubber component>

The rubber composition according to the present invention preferably comprises at least one selected from the group consisting of an isoprene-based rubber, a styrene-butadiene rubber (SBR), and a butadiene rubber (BR) as rubber components. Each rubber component constituting the first layer 6 and the second layer 7 preferably comprises a SBR, more preferably comprises a SBR and a BR, and may be a rubber component consisting only of a SBR and a BR. The rubber component constituting the third layer 8 preferably comprises an isoprene-based rubber, more preferably comprises an isoprene-based rubber and a BR, and may be a rubber component consisting only of an isoprene-based rubber and a BR.

(Isoprene-based rubber)

As an isoprene-based rubber, for example, those common in the tire industry can be used, such as an isoprene rubber (IR) and a natural rubber. Examples of the natural rubber includes a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone or two or more thereof may be used in combination.

The NR is not particularly limited, and those common in the tire industry can be used, examples of which include, for example, SIR20, RSS#3, TSR20, and the like.

When the rubber components constituting the first layer 6 and the second layer 7 comprises the isoprene-based rubber (preferably the natural rubber, more preferably the non-modified natural rubber (NR)), the content thereof in 100% by mass of the rubber component is preferably 50% by mass or less, more preferably 40% by mass or less, further preferably 30% by mass or less, particularly preferably 20% by mass or less, from the viewpoint of wet grip performance. Moreover, a lower limit of the content of the isoprene-based rubber in the rubber components constituting the first layer 6 and the second layer 7 can be, but not particularly limited to, for example, 1% by mass or more, 3% by mass or more, 5% by mass or more, 10% by mass or more, or 15% by mass or more.

When the rubber component constituting the third layer 8 comprises the isoprene-based rubber (preferably the natural rubber, more preferably the non-modified natural rubber (NR)), the content thereof in 100% by mass of the rubber component is preferably 20% by mass or more, more preferably 30% by mass or more, further preferably 40% by mass or more. Moreover, an upper limit of the content of the isoprene-based rubber in the rubber component constituting the third layer 8 is not particularly limited and may be 100% by mass.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated additives of these SBRs (hydrogenated SBRs) and the like can also be used. These SBRs may be used alone or two or more thereof may be used in combination.
Examples of the S-SBR that can be used in the present invention include S-SBRs manufactured and sold by JSR Corporation, Sumitomo Chemical Co., Ltd., Ube Industries, Ltd., Asahi Kasei Corporation, ZS Elastomer Co., Ltd., etc.
A styrene content of the SBR is preferably 10% by mass or more, more preferably 15% by mass or more, further preferably 20% by mass or more, from the viewpoints of wet grip performance and abrasion resistance. Moreover, it is preferably 60% by mass or less, more preferably 55% by mass or less, further preferably 50% by mass or less, from the viewpoints of temperature dependence of grip performance and blow resistance. Besides, in the present specification, the styrene content of the SBR is calculated by $^1$H-NMR measurement.
A vinyl content of the SBR is preferably 10 mol% or more, more preferably 15 mol% or more, further preferably 20 mol% or more, from the viewpoints of ensuring reactivity with silica, wet grip performance, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependence, elongation at break, and abrasion resistance. Besides, in the present specification, the vinyl content of the SBR (1,2-bond butadiene unit amount) is measured by infrared absorption spectrometry.
A weight-average molecular weight (Mw) of the SBR is preferably 200,000 or more, more preferably 250,000 or more, further preferably 300,000 or more, from the viewpoint of wet grip performance. Moreover, the weight-average molecular weight is preferably 2,000,000 or less, more preferably 1,800,000 or less, further preferably 1,500,000 or less, from the viewpoint of cross-linking uniformity. Besides, in the present specification, the weight-average molecular weight of the SBR can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).
When the rubber components constituting the first layer 6 and the second layer 7 comprises the SBR, the content thereof in 100% by mass of the rubber component is preferably 50% by mass or more, more preferably 60% by mass or more, further preferably 65% by mass or more, particularly preferably 70% by mass or more, from the viewpoint of wet grip performance. Moreover, an upper limit of the content of the SBR in the rubber components constituting the first layer 6 and the second layer 7 is not particularly limited and may be 100% by mass. Besides, in the rubber component constituting the third layer 8, the content of the SBR when compounded in 100% by mass of the rubber component is not particularly limited.

(BR)

The BR is not particularly limited, and those common in the tire industry can be used such as, for example, a BR having a cis content of less than 50% (a low cis BR), a BR having a cis content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). Examples of the modified BR include BRs modified with similar functional groups and the like as explained in the above-described SBR. These BRs may be used alone or two or more thereof may be used in combination.
As a high cis BR, for example, those commercially available from Zeon Corporation, Ube Industries, Ltd., JSR Corporation, etc. can be used. When the high cis BR is compounded, low temperature characteristics and abrasion resistance can be improved. The cis content is preferably 95% or more, more preferably 96% or more, further preferably 97% or more, particularly preferably 98% or more. Besides, in the present specification, the cis content (cis-1,4-bond butadiene unit amount) is a value calculated by infrared absorption spectrometry.
As a rare-earth-based BR, those which are synthesized using a rare-earth element-based catalyst, have a vinyl content of preferably 1.8 mol% or less, more preferably 1.0 mol% or less, further preferably 0.8% mol or less and a cis content of preferably 95% or more, more preferably 96% or more, further preferably 97% or more, particularly preferably 98% or more, can be used. As a rare-earth-based BR, for example, those commercially available from LANXESS, etc. can be used.
Examples of the SPB-containing BR include those in which 1,2-syndiotactic polybutadiene crystal is chemically bonded with BR and dispersed, but not those in which the crystal is simply dispersed in the BR. As such SPB-containing

BR, those commercially available from Ube Industries, Ltd., etc. can be used.

As a modified BR, a modified butadiene rubber (a modified BR) modified at its terminal and/or main chain with a functional group comprising at least one element selected from the group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (a tin-modified BR), and the like. Moreover, the modified BR may be either non-hydrogenated or hydrogenated.

The BRs listed above may be used alone or two or more thereof may be used in combination.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the Mw can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

When the rubber components constituting the first layer 6 and the second layer 7 comprises the BR, the content thereof in 100% by mass of the rubber component is preferably 50% by mass or less, more preferably 40% by mass or less, further preferably 30% by mass or less, particularly preferably 20% by mass or less, from the viewpoint of wet grip performance. Moreover, a lower limit of the content of the BR in the rubber components constituting the first layer 6 and the second layer 7 can be, but not particularly limited to, for example, 1% by mass or more, 3% by mass or more, 5% by mass or more, 10% by mass or more, or 15% by mass or more.

When the rubber component constituting the third layer 8 comprises the BR, the content thereof in 100% my mass of the rubber component is preferably 80% by mass or less, more preferably 70% by mass or less, further preferably 65% by mass or less, particularly preferably 60% by mass or less. Moreover, a lower limit of the content of the BR in the rubber component constituting the third layer 8 can be, but not particularly limited to, for example, 1% by mass or more, 3% by mass or more, 5% by mass or more, 10% by mass or more, or 15% by mass or more.

(Other rubber components)

As the rubber components according to the present invention, rubber components other than the above-described isoprene-based rubbers, SBRs, and BRs may be compounded. As other rubber components, cross-linkable rubber components commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydride nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

<Filler>

For the rubber composition according to the present invention, a filler comprising carbon black and/or silica is appropriately used. The rubber compositions constituting the first layer 6 and the second layer 7 more preferably comprise silica as a filler, and more preferably comprise carbon black and silica. The rubber composition constituting the third layer 8 preferably comprises carbon black as a filler.

(Carbon black)

The rubber composition according to the present invention preferably comprises carbon black. When it comprises carbon black, weather resistance, antistatic property, and rubber strength can be improved. As carbon black, those common in the tire industry can be appropriately used, examples of which include, for example, GPF, FEF, HAF, ISAF, SAF, and the like. These carbon black may be used alone or two or more thereof may be used in combination.

A nitrogen adsorption specific surface area ($N_2SA$) of the carbon black is preferably 10 $m^2/g$ or more, more preferably 20 $m^2/g$ or more, from the viewpoint of reinforcing property. Moreover, it is preferably 200 $m^2/g$ or less, more preferably 150 $m^2/g$ or less, further preferably 100 $m^2/g$ or less, further preferably 80 $m^2/g$ or less, particularly preferably 50 $m^2/g$ or less, from the viewpoints of fuel efficiency and processability. Besides, the $N_2SA$ of carbon black is a value measured according to JIS K 6217-2: "Carbon black for rubber industry-Fundamental characteristics-Part 2: Determination of specific surface area-Nitrogen adsorption methods-Single-point procedures".

When the rubber composition comprises the carbon black, the content thereof is, from the viewpoints of abrasion resistance and wet grip performance, preferably 1 part by mass or more, more preferably 3 parts by mass or more,

further preferably 5 parts by mass or more based on 100 parts by mass of the rubber component. Moreover, it is preferably 50 parts by mass or less, more preferably 35 parts by mass or less, further preferably 20 parts by mass or less, particularly preferably 10 parts by mass or less, from the viewpoint of fuel efficiency.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These silica may be used alone or two or more thereof may be used in combination.
A nitrogen adsorption specific surface area ($N_2SA$) of the silica is preferably 140 $m^2/g$ or more, more preferably 170 $m^2/g$ or more, further preferably 200 $m^2/g$ or more, from the viewpoints of fuel efficiency and abrasion resistance. Moreover, it is preferably 350 $m^2/g$ or less, more preferably 300 $m^2/g$ or less, further preferably 250 $m^2/g$ or less, from the viewpoints of fuel efficiency and processability. Besides, the $N_2SA$ of silica in the present specification is a value measured by a BET method according to ASTM D3037-93.
When the rubber composition comprises the silica, the content thereof is, from the viewpoint of wet grip performance, preferably 20 parts by mass or more, more preferably 40 parts by mass or more, further preferably 50 parts by mass or more, particularly preferably 60 parts by mass or more based on 100 parts by mass of the rubber component. Moreover, it is preferably 130 parts by mass or less, more preferably 120 parts by mass or less, further preferably 110 parts by mass or less, from the viewpoint of abrasion resistance.
A total content of silica and carbon black is, from the viewpoint of abrasion resistance, preferably 40 parts by mass or more, more preferably 50 parts by mass or more, further preferably 60 parts by mass or more based on 100 parts by mass of the rubber component. Moreover, it is preferably 160 parts by mass or less, more preferably 140 parts by mass or less, further preferably 120 parts by mass or less, from the viewpoints of fuel efficiency and elongation at break.
In the rubber compositions constituting the first layer 6 and the second layer 7, it is preferable that the content of silica based on 100 parts by mass of the rubber component is larger than that of carbon black from the viewpoint of a balance of fuel efficiency, wet grip performance, and abrasion resistance. A ratio of a content of silica to a total content of silica and carbon black in the first layer 6 and the second layer 7 is preferably 60% by mass or more, more preferably 70% by mass or more, further preferably 80% by mass or more, particularly preferably 85% by mass or more. Besides, a ratio of a content of silica to a content of carbon black in the rubber composition constituting the third layer 8 is not particularly limited.

(Other fillers)

As fillers other than silica and carbon black, those commonly used in the tire industry can be compounded, such as aluminum hydroxide, calcium carbonate, alumina, clay, and talc.

(Silane coupling agent)

Silica is preferably used in combination with a silane coupling agent. The silane coupling agent is not particularly limited, and a silane coupling agent conventionally used in combination with silica in the tire industry can be used, examples of which include, for example, mercapto-based silane coupling agents described below; sulfide-based silane coupling agents such as bis(3-triethoxysilylpropyl)disulfide and bis(3-triethoxysilylpropyl)tetrasulfide; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxy, and the like. Among them, sulfide-based silane coupling agents and/or mercapto-based silane coupling agents are preferable, and mercapto-based silane coupling agents are more preferable. These silane coupling agents may be used alone or two or more thereof may be used in combination.
It is preferable that the mercapto-based silane coupling agent is a compound represented by the following formula (1) and/or a compound comprising a bond unit A represented by the following formula (2) and a bond unit B represented by the following formula (3).

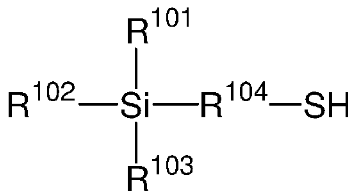

(1)

(wherein, $R^{101}$, $R^{102}$, and $R^{103}$ each independently represents a group represented by alkyl having 1 to 12 carbon atoms, alkoxy having 1 to 12 carbon atoms, or $-O-(R^{111}-O)_z-R^{112}$ (z $R^{111}$s each independently represents a divalent hydrocarbon group having 1 to 30 carbon atoms; $R^{112}$ represents alkyl having 1 to 30 carbon atoms, alkenyl having 2 to 30 carbon atoms, aryl having 6 to 30 carbon atoms, or aralkyl having 7 to 30 carbon atoms; and z represents an integer of 1 to 30); and $R^{104}$ represents an alkylene having 1 to 6 carbon atoms.)

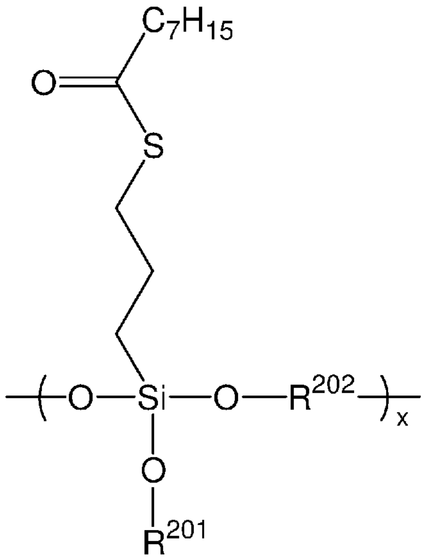

(2)

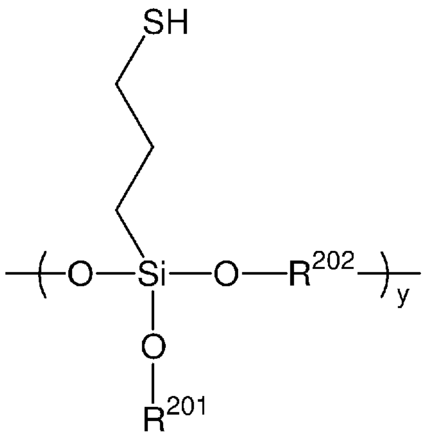

(3)

(wherein, x represents an integer of 0 or more; y represents an integer of 1 or more; $R^{201}$ represents alkyl having 1 to 30 carbon atoms, alkenyl having 2 to 30 carbon atoms, or alkynyl having 2 to 30 carbon atoms, which may be substituted with a hydrogen atom, a halogen atom, hydroxyl, or carboxyl; and $R^{202}$ represents alkylene having 1 to 30 carbon atoms, alkenylene having 2 to 30 carbon atoms, or alkynylene having 2 to 30 carbon atoms; where $R^{201}$ and $R^{202}$ may together form a ring structure.)

Examples of the compound represented by the formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following formula (4) (Si363 manufactured by Evonik Degussa GmbH), and the like, and the compound represented by the following formula (4) can be appropriately used. They may be used alone or two or more

thereof may be used in combination.

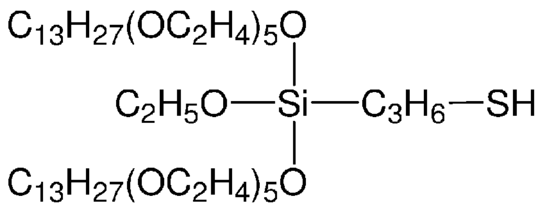

(4)

Examples of the compound comprising the bond unit A represented by the formula (2) and the bond unit B represented by the formula (3) include, for example, those manufactured and sold by Momentive Performance Materials, etc. They may be used alone or two or more thereof may be used in combination.

When the rubber composition comprises the silane coupling agents, the total content thereof is, from the viewpoint of enhancing dispersibility of silica, preferably 0.5 parts by mass or more, more preferably 1.0 part by mass or more, further preferably 2.0 parts by mass or more, particularly preferably 4.0 parts by mass or more based on 100 parts by mass of the rubber component. Moreover, it is preferably 20 parts by mass or less, more preferably 12 parts by mass or less, further preferably 10 parts by mass or less, particularly preferably 9.0 parts by mass or less, from the viewpoint of preventing deterioration of abrasion resistance.

A content of the silane coupling agent based on 100 parts by mass of silica (a total amount of a plurality of silane coupling agents when used in combination) is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

As a filler, other fillers may be used in addition to carbon black and silica. Such filler is not particularly limited, and any filler commonly used in this field such as, for example, aluminum hydroxide, alumina (aluminum oxide), calcium carbonate, magnesium sulfate, talc, and clay can be used. These fillers may be used alone or two or more thereof may be used in combination.

<Plasticizer>

The rubber composition according to the present invention preferably comprises a plasticizer. Examples of the plasticizer include, for example, a resin component, oil, a liquid rubber, an ester-based plasticizer, and the like.

The resin component is not particularly limited, examples of which include a petroleum resin, a terpene-based resin, a rosin-based resin, a phenol-based resin, and the like, which are commonly used in the tire industry. These resin components may be used alone or two or more thereof may be used in combination.

In the present specification, a "C5-based petroleum resin" refers to a resin obtained by polymerizing a C5 fraction. Examples of the C5 fraction include, for example, a petroleum fraction having 4 to 5 carbon atoms such as cyclopentadiene, pentene, pentadiene, and isoprene. As a C5-based petroleum resin, a dicyclopentadiene resin (DCPD resin) is appropriately used.

In the present specification, the "aromatic-based petroleum resin" refers to a resin obtained by polymerizing a C9 fraction, and may be hydrogenated or modified. Examples of the C9 fraction include, for example, a petroleum fraction corresponding to 8 to 10 carbon atoms such as vinyltoluene, alkylstyrene, indene, and methyl indene. As specific examples of the aromatic-based petroleum resin, for example, a cumarone indene resin, a cumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and good in heat generation. As an aromatic vinyl-based resin, for example, those commercially available from Kraton Corporation, Eastman Chemical Company, etc. can be used.

In the present specification, the "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As a C5-C9-based petroleum resin, those commercially available from, for example, Tosoh Corporation, Zibo Luhua Hongjin New Material Co., Ltd., etc. can be appropriately used.

Examples of the terpene-based resin include a polyterpene resin consisting of at least one selected from terpene compounds such as α-pinene, β-pinene, limonene, and dipentene, an aromatic-modified terpene resin made from the terpene compound and an aromatic compound, a terpene phenol resin made from a terpene compound and a phenol-based compound, and those in which these terpene-based resins are hydrogenated (hydrogenated terpene-based resins). Examples of the aromatic compound used as a raw material for the aromatic-modified terpene resin include, for

example, styrene, α-methylstyrene, vinyltoluene, divinyltoluene, and the like. Examples of the phenol-based compound used as a raw material for the terpene phenol resin include, for example, phenol, bisphenol A, cresol, xylenol, and the like.

Example of the rosin-based resin include, but not particularly limited to, for example, a natural resin rosin and a rosin-modified resin obtained by modifying it by hydrogenation, disproportionation, dimerization, esterification, or the like.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A softening point of the resin component is preferably 60°C or higher, more preferably 65°C or higher, from the viewpoint of wet grip performance. Moreover, it is preferably 150°C or lower, more preferably 140°C or lower, further preferably 130°C or lower, from the viewpoints of processability and improvement in dispersibility of a rubber component and a filler. Besides, the softening point in the present specification can be defined as a temperature at which a sphere drops when the softening point specified in JIS K 6220-1: 2001 is measured with a ring and ball softening point measuring device.

When the rubber composition comprises the resin component, the content thereof is, from the viewpoint of wet grip performance, preferably 1 part by mass or more, more preferably 3 parts by mass or more, further preferably 5 parts by mass or more based on 100 parts by mass of the rubber component. Moreover, it is preferably 60 parts by mass or less, more preferably 50 parts by mass or less, further preferably 40 parts by mass or less, particularly preferably 30 parts by mass or less, from the viewpoint of suppressing heat generation.

Examples of oil include, for example, process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic (PCA) compound can also be used. Examples of the low PCA content process oil include a mild extraction solution (MES), a treated distillate aromatic extract (TDAE), a heavy naphthenic oil, and the like.

When the rubber composition comprises the oil, the content thereof is, from the viewpoint of processability, preferably 5 parts by mass or more, more preferably 10 parts by mass or more, further preferably 15 parts by mass or more based on 100 parts by mass of the rubber component. Moreover, it is preferably 120 parts by mass or less, more preferably 100 parts by mass or less, further preferably 90 parts by mass or less, from the viewpoint of abrasion resistance. Besides, in the present specification, the content of oil also includes an amount of oil compounded in an oil-extended rubber.

The liquid rubber is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone or two or more thereof may be used in combination.

When the rubber composition comprises the liquid rubber, the content thereof is preferably 1 part by mass or more, more preferably 2 parts by mass or more, further preferably 3 parts by mass or more, particularly preferably 5 parts by mass or more based on 100 parts by mass of the rubber component. Moreover, the content of the liquid rubber is preferably 50 parts by mass or less, more preferably 40 parts by mass or less, further preferably 20 parts by mass or less.

Examples of the ester-based plasticizer include, for example, dibutyl adipate (DBA), diisobutyl adipate (DIBA), dioctyl adipate (DOA), di2-ethylhexyl azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizers may be used alone or two or more thereof may be used in combination.

A content of the plasticizer based on 100 parts by mass of the rubber component (a total amount of a plurality of plasticizers when used in combination) is preferably 5 parts by mass or more, more preferably 10 parts by mass or more, further preferably 15 parts by mass or more, from the viewpoint of wet grip performance. Moreover, it is preferably 120 parts by mass or less, more preferably 100 parts by mass or less, further preferably 90 parts by mass or less, particularly preferably 80 parts by mass or less, from the viewpoint of processability.

(Other compounding agents)

The rubber composition according to the present invention can appropriately comprise compounding agents conventionally and generally used in the tire industry, for example, wax, processing aid, stearic acid, zinc oxide, an antioxidant, a vulcanizing agent, a vulcanization accelerator, and the like, in addition to the above-described components.

When the rubber composition comprises the wax, the content thereof is, from the viewpoint of weather resistance of a rubber, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of preventing whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone or two or more thereof may be used in combination. As processing aid, for example, those commercially available from Schill+Seilacher GmbH, Performance Additives, etc. can be used.

When the rubber composition comprises the processing aid, the content thereof is, from the viewpoint of exhibiting an effect of improving processability, preferably 0.5 parts by mass or more, more preferably 1 part by mass or more based on 100 parts by mass of the rubber component. Moreover, it is preferably 10 parts by mass or less, more preferably 8 parts by mass or less, from the viewpoints of abrasion resistance and breaking strength.

Examples of the antioxidant include, but not particularly limited to, for example, each amine-based, quinoline-based, quinone-based, phenol-based, and imidazole-based compound, and antioxidants such as a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-l,2-dihydroquinoline. These antioxidants may be used alone or two or more thereof may be used in combination.

When the rubber composition comprises the antioxidant, the content thereof is, from the viewpoint of ozone crack resistance of a rubber, preferably 0.5 parts by mass or more, more preferably 1 part by mass or more based on 100 parts by mass of the rubber component.. Moreover, it is preferably 10 parts by mass or less, more preferably 5 parts by mass or less, from the viewpoints of abrasion resistance and wet grip performance.

When the rubber composition comprises the stearic acid, the content thereof is, from the viewpoint of processability, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of vulcanization rate.

When the rubber composition comprises the zinc oxide, the content thereof is, from the viewpoint of processability, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of abrasion resistance.

Sulfur is appropriately used as a vulcanizing agent. As sulfur, powdery sulfur, oil processing sulfur, precipitated sulfur, colloidal sulfur, insoluble sulfur, highly dispersible sulfur, and the like can be used.

When the rubber composition comprises the sulfur as a vulcanizing agent, the content thereof is, from the viewpoint of securing a sufficient vulcanization reaction, preferably 0.1 parts by mass or more, more preferably 0.3 parts by mass or more, further preferably 0.5 parts by mass or more based on 100 parts by mass of the rubber component. Moreover, it is preferably 5.0 parts by mass or less, more preferably 4.0 parts by mass or less, further preferably 3.0 parts by mass or less, from the viewpoint of preventing deterioration. Besides, a content of the vulcanizing agent when an oil-comprising sulfur is used as the vulcanizing agent shall be a total content of pure sulfur comprised in the oil-comprising sulfur.

Examples of vulcanizing agents other than sulfur include, for example, alkylphenol/sulfur chloride condensate, 1,6-hexamethylene-sodium dithiosulfate/dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone or two or more thereof may be used in combination. Among them, one or more vulcanization accelerators selected from the group consisting of sulfenamide-based, guanidine-based, and thiazole-based vulcanization accelerators are preferable, and sulfenamide-based vulcanization accelerators are more preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-tert-butyl-2-benzothiazolylsulfenamide (TBBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

When the rubber composition comprises the vulcanization accelerator, the content thereof is preferably 1 part

by mass or more, more preferably 2 parts by mass or more based on 100 parts by mass of the rubber component. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

The rubber composition according to the present disclosure can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

Examples of a kneading condition include, but not particularly limited to, for example, in the base kneading step, a method of kneading at a discharge temperature at 150 to 170°C for 3 to 10 minutes, and in the final kneading step, a method of kneading at 70 to 110°C for 1 to 5 minutes. Examples of a vulcanization condition include, but not particularly limited to, for example, a method of vulcanizing at 150 to 200°C for 10 to 30 minutes.

[Tire]

The tire according to the present invention comprises a tread comprising a first layer 6, a second layer 7, and a third layer 8, and may be a pneumatic tire or a non-pneumatic tire. Moreover, it is appropriate for a racing tire, a tire for a passenger car, a tire for a large passenger car, a tire for a large SUV, or a tire for a motorcycle, and can be used as a summer tire, a winter tire, or a studless tire thereof.

The tire comprising a tread comprising a first layer 6, a second layer 7, and a third layer 8 can be manufactured by a usual method using the above-described rubber composition. That is, the tire can be manufactured by extruding unvulcanized rubber compositions, obtained by compounding each of the above-described components based on the rubber component as necessary, into shapes of the first layer 6, the second layer 7, and the third layer 8 with an extruder equipped with a mouthpiece having a predetermined shape, attaching them together with other tire members on a tire forming machine, and molding them by a usual method, forming an unvulcanized tire, followed by heating and pressurizing this unvulcanized tire in a vulcanizing machine.

EXAMPLE

Although the present invention will be described based on Examples, it is not limited to Examples.

Various chemicals used in Examples and Comparative examples are collectively shown below.

NR: TSR20
SBR: Tufdene 4850 manufactured by Asahi Kasei Corporation (unmodified S-SBR, styrene content: 40% by mass, vinyl content: 46 mol%, Mw: 350,000, comprising 50 parts by mass of an oil content based on 100 parts by mass of a rubber solid content)
BR: Ubepol BR (Registered Trademark) 150B manufactured by Ube Industries, Ltd. (vinyl content: 1.5 mol%, cis content: 97% by mass, Mw: 440,000)
Carbon black: Show Black N330 manufactured by Cabot Japan K.K. ($N_2SA$: 75 $m^2/g$)
Silica: Ultrasil VN3 ($N_2SA$: 175 $m^2/g$) manufactured by Evonik Degussa GmbH
Silane coupling agent: NXT-Z45 manufactured by Momentive Performance Materials (mercapto-based silane coupling agent)
Oil: VivaTec 500 manufactured by H8vR Group (TDAE oil)
Antioxidant: Antigen 6C manufactured by Sumitomo Chemical Co., Ltd. (N-(1,3-dimethylbutyl)-N'-phenyl-p-phenylenediamine)
Wax: SUNNOC N manufactured by Ouchi Shinko Chemical Industry Co., Ltd.
Stearic acid: Bead stearic acid "CAMELLIA" manufactured by NOF CORPORATION
Zinc oxide: Zinc oxide No. 2 manufactured by Mitsui Mining 8v Smelting Co., Ltd.
Sulfur: Powdered sulfur manufactured by Karuizawa Sulfur Co, Ltd.
Vulcanization accelerator: Nocceler CZ manufactured by Ouchi Shinko Chemical Industry Co., Ltd. (N-cyclohexyl-2-benzothiazolylsulfenamide)

(Examples and Comparative examples)

According to the compounding formulations shown in Tables 1 and 2, using a 1.7 L closed Banbury mixer, all chemicals other than sulfur and vulcanization accelerators were kneaded until a discharge temperature at 150°C to 160°C for 1 to 10 minutes to obtain a kneaded product. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was molded into each shape of the first layer, the second layer and the third layer of the tread, and attached together with other tire members, preparing an unvulcanized tire, and then the unvulcanized tire was vulcanized at 170°C to obtain each test tire shown in Table 3 (size: 195/65R15 91V, rim: 15 × 6.0J, internal pressure: 240 kPa).

Besides, as shown in FIG. 1, the tread, as the tires of Examples 1 to 9 and Comparative examples 1 and 5, comprises a first rubber layer constituting a tread surface, a second rubber layer adjacent to inside in a tire radial direction of the first rubber layer, and a third rubber layer adjacent to inside in a tire radial direction of the second rubber layer, wherein the third rubber layer adopts a configuration formed asymmetrically with respect to a normal line passing through a center in a tire width direction of a land part sandwiched between circumferential grooves in a tire meridian cross section including a tire rotation axis. Moreover, as shown in FIG. 2, the tread, as the tires of Comparative examples 2 and 4, comprises a first rubber layer constituting a tread surface, a second rubber layer adjacent to inside in a tire radial direction of the first rubber layer, and a third rubber layer adjacent to inside in a tire radial direction of the second rubber layer, wherein the third rubber layer adopts a configuration formed symmetrically with respect to a normal line passing through a center in a tire width direction of a land part sandwiched between circumferential grooves in a tire meridian cross section including a tire rotation axis.

<Measurement of loss tangent tan δ, complex elastic modulus E*, and glass transition temperature (Tg)>

For each rubber test piece produced by being cut out with length 20 mm × width 4 mm × thickness 1 mm from inside of a rubber layer of a tread part of each test tire so that a tire circumferential direction is on a long side, using a dynamic viscoelasticity measuring device EPLEXOR (Registered Trademark) series manufactured by gabo Systemtechnik GmbH, a loss tangent tan δ and a complex elastic modulus E* were measured under a condition of a temperature at 30°C, an initial strain of 10%, a dynamic strain of 1%, and a frequency of 10 Hz. Moreover, a temperature distribution curve of the loss tangent tan δ was measured under a condition of an initial strain 10%, a dynamic strain 1%, and a frequency 10 Hz, and a temperature corresponding to the largest tan δ value in the obtained temperature distribution curve (tan δ peak temperature) was defined as a glass transition temperature (Tg). Besides, a thickness direction of a sample was defined as a tire radial direction.

<Tensile test>

A dumbbell-shaped No. 7 test piece with a thickness of 1 mm, which was cut out from inside of the rubber layer of the tread part of each test tire so that a tire circumferential direction became a tensile direction, was prepared, and according to JIS K 6251: 2017 "Rubber, vulcanized or thermoplastics-Determination of tensile stress-strain properties", a tensile test was conducted under a condition of a tensile speed of 3.3 mm/sec in an atmosphere of 23°C to measure an elongation at break (%) and a modulus (MPa) at 100% stretching. Besides, a thickness direction of a sample was defined as a tire radial direction.

<Fuel efficiency>

Using a rolling resistance tester, a rolling resistance when each test tire at the time of the tire being a new article was run under a condition of a rim of 15 × 6.0J, an internal pressure of 230 kPa, a load of 4.24 kN, and a speed at 80 km/h was measured, and the inverse value was indicated as an index as Comparative example 1 being 100. The results show that the larger the numerical value is, the smaller the rolling resistance is, and the better the fuel efficiency is.

<Wet grip performance at the time of the tire being a new article and after abrasion>

Each test tire (size: 195/65R15, rim: 15 × 6.0J, internal pressure: 230 kPa) was mounted on all wheels of a vehicle (domestic FF2000 cc), and a braking distance from a point where a brake was applied at a speed of 100 km/h on a wet asphalt road surface was measured. Furthermore, after thermally deteriorating the above-described tire at 80°C for 7 days, each test tire, in which a tread part was worn along a tread radius so that a thickness of the tread part became 50% of that at the time of the tire being a new article, was mounted on all wheels of the vehicle, and a braking distance from a point where a brake was applied at a speed of 100 km/h on the wet asphalt road surface was measured.

A wet grip performance of each tire at the time of the tire being a new article and after abrasion was indicated as an index by the following equations, as each braking distance of the test tire of Comparative Example 1 at the time of the tire being a new article and after abrasion being 100. The results show that the larger the index is, the better the wet grip performance is.

(Wet grip performance index at the time of the tire being a new article) = (braking distance at the time of the tire of Comparative example 1 being a new article) / (braking distance at the time of each test tire being a new article) × 100

(Wet grip performance index after abrasion) = (braking distance after abrasion of the tire of Comparative example 1) / (braking distance after abrasion of each test tire) × 100

A target performance value for a total performance of fuel efficiency, a wet grip performance at the time of the tire being a new article, and a wet grip performance after abrasion (a sum of a fuel efficiency index, a wet grip performance index at the time of the tire being a new article, and a wet grip performance index after abrasion) shall be over 300.

Table 1

| | Compounding for first layer | | | | Compounding for second layer | | | | | |
|---|---|---|---|---|---|---|---|---|---|---|
| | A1 | A2 | A3 | A4 | B1 | B2 | B3 | B4 | B5 | B6 |
| Compounding amount (part by mass) | | | | | | | | | | |
| SBR | 127.5 | 127.5 | 127.5 | 127.5 | 127.5 | 127.5 | 127.5 | 127.5 | 127.5 | 127.5 |
| (Oil content) | (42.5) | (42.5) | (42.5) | (42.5) | (42.5) | (42.5) | (42.5) | (42.5) | (42.5) | (42.5) |
| BR | 15 | 15 | 15 | 15 | 15 | 15 | 15 | 15 | 15 | 15 |
| Carbon black | 50 | 50 | 40 | 50 | 40 | 40 | 50 | 10 | 40 | 10 |
| Silica | 90 | 90 | 65 | 90 | 65 | 65 | 90 | 70 | 65 | 70 |
| Silane coupling agent | 7.2 | 7.2 | 5.2 | 7.2 | 5.2 | 5.2 | 7.2 | 5.6 | 5.2 | 5.6 |
| Oil | 30 | 40 | - | 45 | 15 | 20 | 50 | - | 5.0 | 5.0 |
| Antioxidant | 2.0 | 2.0 | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 | 2.0 | 2.0 |
| Zinc oxide | 2.5 | 2.5 | 2.5 | 2.5 | 2.5 | 2.5 | 2.5 | 2.5 | 2.5 | 2.5 |
| Sulfur | 1.5 | 1.5 | 1.5 | 1.5 | 1.5 | 1.5 | 1.5 | 1.7 | 1.5 | 1.7 |
| Vulcanization accelerator | 2.0 | 2.0 | 2.0 | 2.0 | 2.0 | 2.0 | 2.0 | 2.5 | 2.0 | 2.5 |
| Physical property | | | | | | | | | | |
| 30°C E* (MPa) | 15 | 12 | 15 | 10 | 9 | 8 | 9 | 9 | 12 | 7 |
| 30°C tan δ | 0.40 | 0.40 | 0.30 | 0.40 | 0.30 | 0.30 | 0.40 | 0.20 | 0.30 | 0.20 |
| Acetone extraction amount (% by mass) | 12 | 15 | 12 | 18 | 20 | 21 | 20 | 20 | 15 | 22 |
| Tg (°C) | -10 | -10 | -10 | -10 | -10 | -10 | -10 | -10 | -10 | -10 |

(continued)

| | | | | | | | | | | |
|---|---|---|---|---|---|---|---|---|---|---|
| Physical property | | | | | | | | | | |
| Shore hardness (Hs) | 70 | 68 | 70 | 66 | 65 | 64 | 65 | 65 | 68 | 63 |
| 100% modulus (MPa) | 1.7 | 1.4 | 2.3 | 1.3 | 1.7 | 1.5 | 1.1 | 1.9 | 2.1 | 1.7 |

Table 2

| | Compounding for third layer | | | |
|---|---|---|---|---|
| | C1 | C2 | C3 | C4 |
| Compounding amount (part by mass) | | | | |
| NR | 40 | 40 | 40 | 40 |
| BR | 60 | 60 | 60 | 60 |
| Carbon black | 60 | 60 | 60 | 85 |
| Oil | 20 | 5.0 | 26 | 45 |
| Antioxidant | 2.0 | 2.0 | 2.0 | 2.0 |
| Wax | 2.0 | 2.0 | 2.0 | 2.0 |
| Stearic acid | 2.0 | 2.0 | 2.0 | 2.0 |
| Zinc oxide | 2.5 | 2.5 | 2.5 | 2.5 |
| Sulfur | 2.5 | 2.5 | 2.5 | 2.5 |
| Vulcanization accelerator | 2.0 | 2.0 | 2.0 | 2.0 |
| Physical property | | | | |
| 30°C E* (MPa) | 7 | 11 | 6 | 7 |
| 30°C tan δ | 0.20 | 0.20 | 0.20 | 0.30 |

Table 3

| | Comparative Example | | | | | Example | | | | | | | | |
|---|---|---|---|---|---|---|---|---|---|---|---|---|---|---|
| | 1 | 2 | 3 | 4 | 5 | 1 | 2 | 3 | 4 | 5 | 6 | 7 | 8 | 9 |
| Compounding for first layer | A2 | A1 | A1 | A1 | A3 | A1 | A1 | A1 | A1 | A2 | A1 | A4 | A2 | A1 |
| Compounding for second layer | B2 | B1 | B1 | B6 | B3 | B1 | B1 | B1 | B1 | B2 | B4 | B5 | B1 | B5 |
| Compounding for third layer | C2 | C1 | C1 | - | C1 | C1 | C1 | C1 | C1 | C3 | C4 | C1 | C1 | C2 |
| 30°C E* (MPa) | | | | | | | | | | | | | | |
| First layer | 12 | 15 | 15 | 15 | 15 | 15 | 15 | 15 | 15 | 12 | 15 | 10 | 12 | 15 |
| Second layer | 8 | 9 | 9 | 7 | 9 | 9 | 9 | 9 | 9 | 8 | 9 | 12 | 9 | 12 |
| Third layer | 11 | 7 | 7 | - | 7 | 7 | 7 | 7 | 7 | 6 | 7 | 7 | 7 | 11 |
| 30°C tan δ | | | | | | | | | | | | | | |
| First layer | 0.40 | 0.40 | 0.40 | 0.40 | 0.30 | 0.40 | 0.40 | 0.40 | 0.40 | 0.40 | 0.40 | 0.40 | 0.40 | 0.40 |
| Second layer | 0.30 | 0.30 | 0.30 | 0.20 | 0.40 | 0.30 | 0.30 | 0.30 | 0.30 | 0.30 | 0.20 | 0.30 | 0.30 | 0.30 |
| Third layer | 0.20 | 0.20 | 0.20 | - | 0.20 | 0.20 | 0.20 | 0.20 | 0.20 | 0.20 | 0.30 | 0.20 | 0.20 | 0.20 |
| Tg (°C) | | | | | | | | | | | | | | |
| First layer | -10 | -10 | -10 | -10 | -10 | -10 | -10 | -10 | -10 | -10 | -10 | -10 | -10 | -10 |
| Second layer | -10 | -10 | -10 | -10 | -10 | -10 | -10 | -10 | -10 | -10 | -10 | -10 | -10 | -10 |
| EB (%) | | | | | | | | | | | | | | |
| First layer | 570 | 520 | 520 | 520 | 440 | 520 | 520 | 520 | 520 | 570 | 520 | 600 | 570 | 520 |
| Second layer | 560 | 530 | 530 | 500 | 620 | 530 | 530 | 530 | 530 | 560 | 470 | 480 | 530 | 480 |
| 100% modulus (MPa) | | | | | | | | | | | | | | |
| First layer | 1.4 | 1.7 | 1.7 | 1.7 | 2.3 | 1.7 | 1.7 | 1.7 | 1.7 | 1.4 | 1.7 | 1.3 | 1.4 | 1.7 |
| Second layer | 1.5 | 1.7 | 1.7 | 1.7 | 1.1 | 1.7 | 1.7 | 1.7 | 1.7 | 1.5 | 1.9 | 2.1 | 1.7 | 2.1 |
| | Comparative Example | | | | | Example | | | | | | | | |
| | 1 | 2 | 3 | 4 | 5 | 1 | 2 | 3 | 4 | 5 | 6 | 7 | 8 | 9 |
| t1 (mm) | 3 | 3 | 3 | 7 | 3 | 3 | 3 | 2 | 4 | 3 | 3 | 3 | 3 | 3 |
| t2 (mm) | 3 | 5 | 3 | 3 | 3 | 3 | 4 | 4 | 3 | 3 | 3 | 3 | 3 | 3 |
| t3 (mm) | 4 | 2 | 4 | - | 4 | 4 | 3 | 4 | 3 | 4 | 4 | 4 | 4 | 4 |
| H1 (mm) | 7 | 7 | 7 | 8 | 7 | 7 | 8 | 7 | 8 | 7 | 7 | 7 | 7 | 7 |

(continued)

| | Comparative Example | | | | | Example | | | | | | | | |
|---|---|---|---|---|---|---|---|---|---|---|---|---|---|---|
| | 1 | 2 | 3 | 4 | 5 | 1 | 2 | 3 | 4 | 5 | 6 | 7 | 8 | 9 |
| Tread pattern | FIG. 1 | FIG. 2 | FIG. 2 | FIG. 2 | FIG. 1 | FIG. 1 | FIG. 1 | FIG. 1 | FIG. 1 | FIG. 1 | FIG. 1 | FIG. 1 | FIG. 1 | FIG. 1 |
| Index | | | | | | | | | | | | | | |
| Fuel efficiency | 100 | 98 | 100 | 93 | 100 | 100 | 98 | 101 | 98 | 100 | 98 | 100 | 100 | 100 |
| Wet grip performance at the time of tire being new article | 100 | 100 | 100 | 100 | 92 | 100 | 100 | 100 | 100 | 100 | 100 | 100 | 100 | 100 |
| Wet grip performance after abrasion | 100 | 97 | 97 | 102 | 100 | 111 | 108 | 111 | 108 | 111 | 107 | 111 | 111 | 105 |
| Total performance | 300 | 295 | 297 | 295 | 292 | 311 | 306 | 312 | 306 | 311 | 305 | 311 | 311 | 305 |

From the results in Tables 1 to 3, it can be seen that the tire of the present invention, in which three or more rubber layers are provided on the tread part, a complex elastic modulus E* and a loss tangent tan δ of the rubber layers are set in a predetermined relationship, and a third layer corresponding to the bottom part of the land part is formed asymmetrically in a tire width direction, has an improved overall performance of fuel efficiency, a wet grip performance at the time of the tire being a new article, and a wet grip performance after abrasion.

EXPLANATION OF NUMERALS

1. Circumferential groove
2. Land part
3. Tread surface
4. Extension line of land part
5. Extension line of deepest part of groove bottom of circumferential groove
6. First layer
7. Second layer
8. Third layer
9. Outermost extension line of second layer
10. Outermost extension line of third layer

## Claims

1. **1.** A tire having a tread at least comprising a first rubber layer (6) constituting a tread surface (3), a second rubber layer (7) adjacent to inside in a tire radial direction of the first rubber layer, and a third rubber layer (8) adjacent to inside in a tire radial direction of the second rubber layer (7),

    wherein a complex elastic modulus of the third rubber layer (8) at 30°C is lower than a complex elastic modulus of the first rubber layer at 30°C and a complex elastic modulus of the second rubber layer (7) at 30°C,
    wherein a tan δ of the first rubber layer at 30°C is higher than a tan δ of the second rubber layer (7) at 30°C and a tan δ of the third rubber layer (8) at 30°C,
    wherein the tread has land parts (2) partitioned by a plurality of circumferential grooves (1) extending continuously in a tire circumferential direction,
    wherein at least one of the land parts (2) has the third layer (8) formed asymmetrically with respect to a normal line (N) passing through the center in the tire width direction (P) in a tire meridian cross section including a tire rotation axis,
    wherein the thickness of the third rubber layer (t3) is 1.0 mm or more or 10.0 mm or less, and
    wherein the complex elastic modulus and the tan δ is measured under a condition of a temperature at 30°C, an initial strain of 10%, a dynamic strain of 1%, and a frequency of 10 Hz.

**2.** The tire of claim 1, wherein a ratio of a thickness of the third layer (t3) to a total thickness of the first layer (t1), the second layer (t2), and the third layer (t3) is 0.30 or more.

**3.** The tire of claim 1 or 2, wherein the complex elastic modulus of the second rubber layer (7) at 30°C is lower than the complex elastic modulus of the first rubber layer (6) at 30°C.

**4.** The tire of any one of claims 1 to 3, wherein the complex elastic modulus of the second layer (7) at 30°C is 8 MPa or more.

**5.** The tire of any one of claims 1 to 4, wherein the tan δ of the second rubber layer (7) at 30°C is 0.25 or more.

**6.** The tire of any one of claims 1 to 5, wherein a glass transition temperature of the first rubber layer (6) is -15°C or higher.

**7.** The tire of any one of claims 1 to 6, wherein a glass transition temperature of the second rubber layer (7) is -20°C or higher.

**8.** The tire of any one of claims 1 to 7, wherein an elongation at break of the first rubber layer (6) measured according

to JIS K 6251 is 500% or more.

9. The tire of any one of claims 1 to 8, wherein an elongation at break of the second rubber layer (7) measured according to JIS K 6251 is 450% or more.

10. The tire of any one of claims 1 to 9, wherein a modulus of the second rubber layer (7) at 100% stretching is larger than that of the first rubber layer (6) at 100% stretching.

11. The tire of any one of claims 1 to 10, wherein a deepest part of a groove bottom of any one of the circumferential grooves (1) is formed so as to be located inside in a tire radial direction with respect to an outermost part of the second rubber layer (7) in the land part (2) adjacent to the circumferential groove (1).

12. The tire of any one of claims 1 to 11, wherein the land part (2) has sipes having both ends not opened in the circumferential groove (1).

**Patentansprüche**

1. Reifen mit einer Lauffläche, die mindestens eine erste Gummischicht (6), die eine Laufflächenoberfläche (3) bildet, eine zweite Gummischicht (7), die an eine Innenseite in einer Reifenradialrichtung der ersten Gummischicht angrenzt, und eine dritte Gummischicht (8), die an eine Innenseite in der Reifenradialrichtung der zweiten Gummischicht (7) angrenzt, umfasst,

   wobei ein komplexer Elastizitätsmodul der dritten Gummischicht (8) bei 30°C niedriger ist als ein komplexer Elastizitätsmodul der ersten Gummischicht bei 30°C und ein komplexer Elastizitätsmodul der zweiten Gummischicht (7) bei 30°C,
   wobei ein tan δ der ersten Gummischicht bei 30°C höher ist als ein tan δ der zweiten Gummischicht (7) bei 30°C und ein tan δ der dritten Gummischicht (8) bei 30°C,
   wobei die Lauffläche Landteile (2) aufweist, die durch eine Vielzahl von Umfangsrillen (1) unterteilt sind, die sich kontinuierlich in einer Reifenumfangsrichtung erstrecken,
   wobei mindestens einer der Landteile (2) die dritte Schicht (8) aufweist, die asymmetrisch in Bezug auf eine Normallinie (N) ausgebildet ist, die durch die Mitte in der Reifenbreitenrichtung (P) in einem Reifenmeridianquerschnitt verläuft, der eine Reifendrehachse einschließt,
   wobei die Dicke der dritten Gummischicht (t3) 1,0 mm oder mehr oder 10,0 mm oder weniger beträgt, und
   wobei der komplexe Elastizitätsmodul und der tan δ unter einer Bedingung einer Temperatur von 30°C, einer anfänglichen Dehnung von 10%, einer dynamischen Dehnung von 1% und einer Frequenz von 10 Hz gemessen wird.

2. Reifen nach Anspruch 1, wobei ein Verhältnis einer Dicke der dritten Schicht (t3) zu einer Gesamtdicke der ersten Schicht (t1), der zweiten Schicht (t2) und der dritten Schicht (t3) 0,30 oder mehr beträgt.

3. Reifen nach Anspruch 1 oder 2, wobei der komplexe Elastizitätsmodul der zweiten Gummischicht (7) bei 30°C niedriger ist als der komplexe Elastizitätsmodul der ersten Gummischicht (6) bei 30°C.

4. Reifen nach einem der Ansprüche 1 bis 3, wobei der komplexe Elastizitätsmodul der zweiten Schicht (7) bei 30°C 8 MPa oder mehr beträgt.

5. Reifen nach einem der Ansprüche 1 bis 4, wobei ein tan δ der zweiten Gummischicht (7) bei 30°C 0,25 oder mehr beträgt.

6. Reifen nach einem der Ansprüche 1 bis 5, wobei eine Glasübergangstemperatur der ersten Gummischicht (6) -15°C oder höher ist.

7. Reifen nach einem der Ansprüche 1 bis 6, wobei eine Glasübergangstemperatur der zweiten Gummischicht (7) -20°C oder höher ist.

8. Reifen nach einem der Ansprüche 1 bis 7, wobei eine Bruchdehnung der ersten Gummischicht (6), gemessen nach JIS K 6251, 500 % oder mehr beträgt.

**9.** Reifen nach einem der Ansprüche 1 bis 8, wobei die Bruchdehnung der zweiten Gummischicht (7), gemessen nach JIS K6251, 450 % oder mehr beträgt.

**10.** Reifen nach einem der Ansprüche 1 bis 9, wobei ein Modul der zweiten Gummischicht (7) bei 100 % Dehnung größer ist als der der ersten Gummischicht (6) bei 100 % Dehnung.

**11.** Reifen nach einem der Ansprüche 1 bis 10, wobei ein tiefster Teil eines Rillengrunds einer beliebigen der Umfangsrillen (1) so ausgebildet ist, dass er sich in einer Reifenradialrichtung in Bezug auf einen äußersten Teil der zweiten Gummischicht (7) in dem an die Umfangsrille (1) angrenzenden Landteil (2) innen befindet.

**12.** Reifen nach einem der Ansprüche 1 bis 11, wobei der Landteil (2) Feinschnitte aufweist, deren beide Enden in der Umfangsrille (1) nicht geöffnet sind.

## Revendications

**1.** Pneumatique ayant une bande de roulement comprenant au moins une première couche de caoutchouc (6) constituant une surface de la bande de roulement (3), une deuxième couche de caoutchouc (7) adjacente à l'intérieur dans une direction radiale de pneumatique de la première couche de caoutchouc, et une troisième couche de caoutchouc (8) adjacente à l'intérieur dans une direction radiale de pneumatique de la deuxième couche de caoutchouc (7),

dans lequel un module élastique complexe de la troisième couche de caoutchouc (8) à 30 °C est plus faible qu'un module élastique complexe de la première couche de caoutchouc à 30 °C et qu'un module élastique complexe de la deuxième couche de caoutchouc (7) à 30 °C,
dans lequel une tan δ de la première couche de caoutchouc à 30 °C est supérieure à une tan δ de la deuxième couche de caoutchouc (7) à 30 °Cet à une tan δ de la troisième couche de caoutchouc (8) à 30 °C,
dans lequel la bande de roulement a des parties de bord de sillon (2) réparties par une pluralité de sillons circonférentiels (1) s'étendant en continu
dans une direction circonférentielle de pneumatique,
dans lequel au moins une des parties de bord de sillon (2) a la troisième couche (8) formée asymétriquement par rapport à une ligne normale (N) passant à travers le centre dans la direction de largeur de pneumatique (P) dans une section transversale méridienne de pneumatique comprenant un axe de rotation de pneumatique,
dans lequel l'épaisseur de la troisième bande de caoutchouc (t3) est de 1,0 mm ou plus et 10,0 mm ou moins, et
dans lequel le module élastique complexe et la tan δ sont mesurés sous une condition d'une température à 30 °C, une contrainte initiale d e10 %, une contrainte dynamique de 1 % et une fréquence de 10 Hz.

**2.** Pneumatique selon la revendication 1, dans lequel un rapport d'une épaisseur de la troisième couche (t3) à une épaisseur totale de la première couche (t1), de la deuxième couche (t2) et de la troisième couche (t3) est de 0,30 ou plus.

**3.** Pneumatique selon la revendication 1 ou 2, dans lequel le module élastique complexe de la deuxième couche de caoutchouc (7) à 30 °C est inférieur au module élastique complexe de la première couche de caoutchouc (6) à 30 °C.

**4.** Pneumatique selon l'une quelconque des revendications 1 à 3, dans lequel le module élastique complexe de la deuxième couche (7) à 30 °C est de 8 MPa ou plus.

**5.** Pneumatique selon l'une quelconque des revendications 1 à 4, dans lequel la tan δ de la deuxième couche de caoutchouc (7) à 30 °C est de 0,25 ou plus.

**6.** Pneumatique selon l'une quelconque des revendications 1 à 5, dans lequel une température de transition vitreuse de la première couche de caoutchouc (6) est de -15 °C ou plus.

**7.** Pneumatique selon l'une quelconque des revendications 1 à 6, dans lequel une température de transition vitreuse de la deuxième couche de caoutchouc (7) est de -20 °C ou plus.

**8.** Pneumatique selon l'une quelconque des revendications 1 à 7, dans lequel une élongation à la rupture de la première couche de caoutchouc (6) mesurée selon la norme JIS K 6251 est de 500 % ou plus.

**9.** Pneumatique selon l'une quelconque des revendications 1 à 8, dans lequel une élongation à la rupture de la deuxième couche de caoutchouc (7) mesurée selon la norme JIS K 6251 est de 450 % ou plus.

**10.** Pneumatique selon l'une quelconque des revendications 1 à 9, dans lequel un module de la deuxième couche de caoutchouc (7) à 100 % d'étirement est plus grand que celui de la première couche de caoutchouc (6) à 100 % d'étirement.

**11.** Pneumatique selon l'une quelconque des revendications 1 à 10, dans lequel une partie la plus profonde d'une partie inférieure de sillon de l'un quelconque des sillons circonférentiels (1) est formée de manière à être située à l'intérieur dans une direction radiale de pneumatique par rapport à une partie la plus externe de la deuxième couche de caoutchouc (7) dans la partie de bord de sillon (2) adjacente au sillon circonférentiel (1).

**12.** Pneumatique selon l'une quelconque des revendications 1 à 11, dans lequel la partie de bord de sillon (2) a des rainures ayant les deux extrémités non ouvertes dans le sillon circonférentiel (1).

FIG. 1

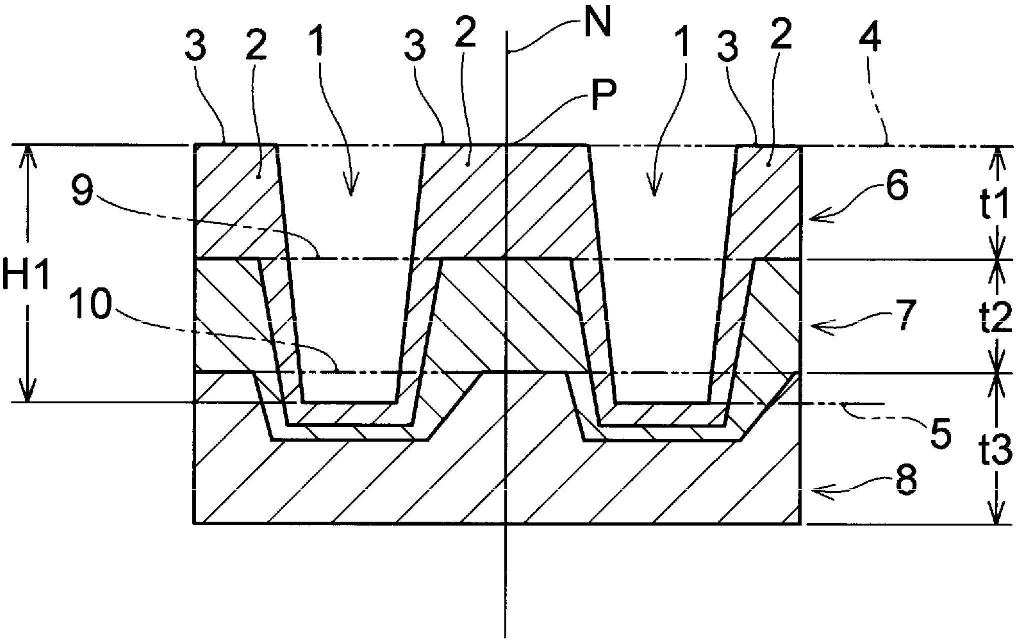
3
2
1
3
2
N
1
3
2
4
P
9
6
t1
H1
10
7
t2
5
t3
8

FIG. 2

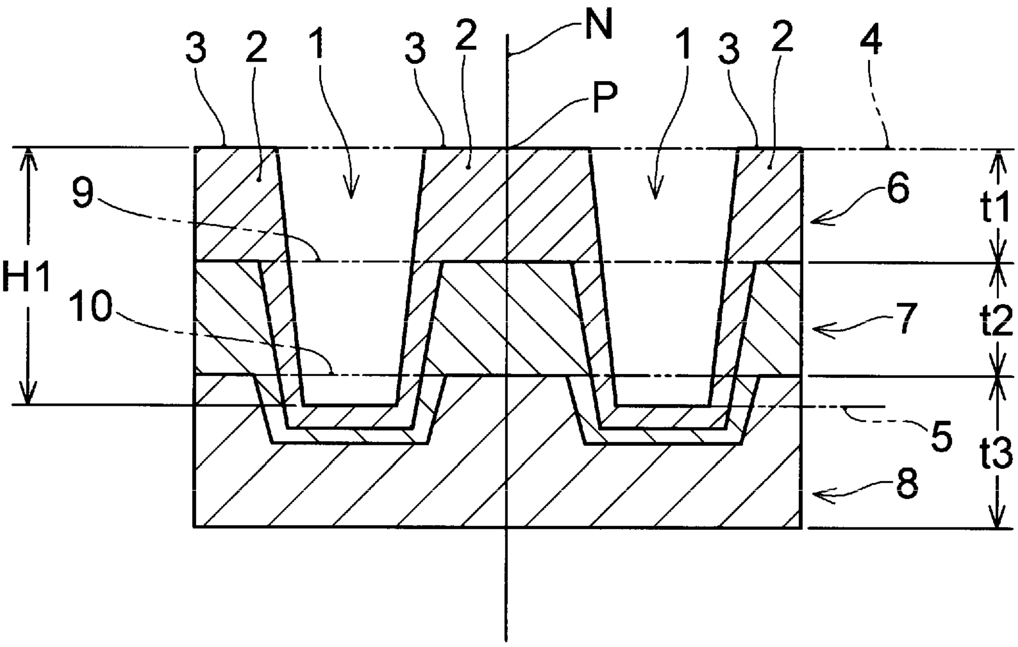
3
2
1
3
2
N
1
3
2
4
P
9
6
t1
H1
10
7
t2
5
t3
8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3213127 B
- JP 2005035404 A
- EP 3141402 A1
- JP 2015131599 A